Europäisches Patentamt

European Patent Office

Office européen des brevets

(11) Numéro de publication: **0 179 728**
**B1**

(12) **FASCICULE DE BREVET EUROPÉEN**

(51) Int. Cl.⁴: **B 60 R 25/06**

(45) Date de publication du fascicule du brevet:
**04.10.89**

(21) Numéro de dépôt: **85430036.5**

(22) Date de dépôt: **15.10.85**

(54) Procédé et dispositif antivol notamment pour automobile agissant en bloquant l'action du câble d'embrayage.

(30) Priorité: **22.10.84 FR 8416239**

(43) Date de publication de la demande:
**30.04.86 Bulletin 86/18**

(45) Mention de la délivrance du brevet:
**04.10.89 Bulletin 89/40**

(84) Etats contractants désignés:
**AT BE CH DE GB IT LI LU NL SE**

(56) Documents cité:
**FR-A-853 984**
**FR-A-922 217**
**FR-A-923 301**
**FR-A-924 757**
**FR-A-929 501**
**FR-E-54 940**
**FR-E-56 955**
**US-A-1 448 983**
**US-A-2 657 757**

(73) Titulaire: **Barbarot, Gisèle née Maire, 8 avenue des Ecoles "Le Mireille", F-06110 Le Cannet Rocheville (FR)**

(72) Inventeur: **Barbarot, Gisèle née Maire, 8 avenue des Ecoles "Le Mireille", F-06110 Le Cannet Rocheville (FR)**

(74) Mandataire: **Hautier, Jean- Louis, OFFICE MEDITERRANEEN DE BREVETS D'INVENTION 24 rue Masséna, F-06000 Nice (FR)**

LIBER, STOCKHOLM 1989

EP 0 179 728 B1

## Description

L'invention a pour objet un dispositif antivol pour automobile, agissant par des moyens hydrauliques ou mécaniques, en bloquant l'action du câble d'embrayage.

La plupart des automobiles sont protégées contre le vol par des antivols, disposés au niveau de l'axe de la direction. Ces dispositifs consistent dans l'emploi d'une clef de sûreté, qui permet de couper le circuit d'allumage. Ces dispositifs sont peu efficaces, car il est facile de détruire l'antivol et de rétablir le circuit pour actionner le démarreur.

De manière à éviter ces inconvénients, des dispositifs mécaniques ont été conçus pour protéger les voitures contre le vol. Ainsi, un collier ou tenaille composé de deux mâchoires peut être mis en place autour des leviers des pédales. De même, le levier de vitesse peut comporter un manchon de blocage, qui est actionné par une clef de sureté. Ces différents dispositifs sont facilement accessibles. Il est donc possible de les fracturer et ensuite de voler l'automobile.

L'état de la technique servant de point de départ à l'invention revendiquée peut être défini par le brevet FR-A-922 217. Ce dispositif comporte:

- un dispositif de commande (1, 2) disposé dans l'habitacle du véhicule et commandé par une clef de sécurité (24 à 29) munie d'un code programmé prédéterminé

- un boîtier de sécurité (18) disposé dans le compartiment moteur du véhicule, à travers lequel passe directement l'organe (20, 20', 21) essentiel à la marche du véhicule dans le boîtier de sécurité (18), des moyens électromécaniques (22), commandés par le dispositif de commande (1, 2) bloquent à volonté directement le passage dudit organe (20, 20', 21).

L'invention tend à éviter tous ces inconvénients.

L'invention a pour objet un dispositif pour protéger un véhicule automobile contre le vol utilisant le blocage d'un organe essentiel à la marche du véhicule, ce dispositif comprenant:

- un boîtier de commande fixé à l'intérieur de l'habitacle du véhicule, et pouvant être actionné soit au moyen d'une clé de sécurité, soit au moyen d'un code électronique de chiffres et/ou de lettres programmé par le conducteur,

- d'un boîtier de sécurité à travers lequel est monté coulissant ledit organe, ce boîtier de sécurité étant fixé dans le compartiment moteur du véhicule,

- des moyens électromécaniques de blocage et de déblocage montés dans le boîtier de sécurité et mettant en jeu une tige normalement rappelée dans sa position de blocage de l'organe et débloquant l'organe contre l'action de son ressort de rappel lorsque les moyens électromécaniques reçoivent un signal électrique du boîtier de commande,

ledit dispositif est caractérisé en ce que:

- l'organe essentiel de la marche du véhicule est son câble d'embrayage;

- le câble d'embrayage muni d'un serre-câble est guidé dans le boîtier par une pièce de guidage, le serre-câble venant buter dans sa course contre l'une ou l'autre des extrémités opposées du boîtier de sécurité;

- la pièce de guidage comporte un trou à travers lequel pénètre, à coulissement, la tige contre laquelle bute l'une des extrémités du serre-câble dans sa position de blocage;

- un support est fixé à l'intérieur du boîtier de sécurité et traversé par la tige coulissante;

- des disques de butée sont fixés sur la tige de blocage de part et d'autre du support de manière à limiter le coulissement de la tige, le ressort de rappel de la tige étant disposé entre l'un des disques et le support;

- des moyens de réarmement électromécaniques coopérant avec l'autre disque de butée pour ramener la tige de sa position de blocage à sa position de non-blocage dès réception d'un signal électrique provenant du boîtier de commande et la maintenir ainsi en vue d'une nouvelle utilisation du véhicule.

Selon un mode réalisation préféré de l'invention:

- L'action de la tige de blocage est assurée par un électro-aimant disposé dans l'axe de ladite tige, en regard de l'autre disque et un ressort de rappel disposé coaxialement à la tige entre le support et le premier disque.

- Les moyens de réarmement sont composés d'un levier pourvu d'un ressort de rappel et d'un électro-aimant disposé à proximité dudit levier, l'extrémité dudit levier vient buter ou non contre l'autre disque.

Les dessins ci-joints donnés à titre d'exemple indicatif et non limitatif permettront aisément de comprendre l'invention.

Ils représentent un mode de réalisation préféré selon l'invention.

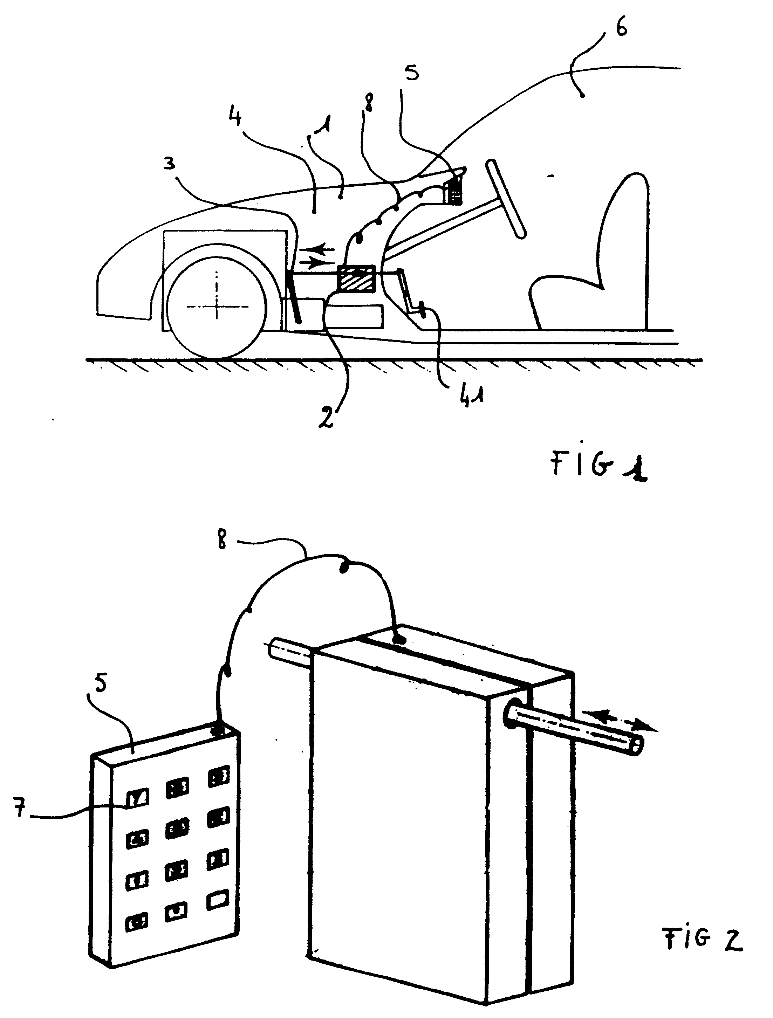

La figure 1 est une vue schématique du dispositif mis en place dans une automobile.

La figure 2 est une vue schématique du boîtier de sécurité, de son boîtier de commande et du câble d'embrayage, passant à travers ledit boîtier de sécurité.

La figure 3 est une vue du boîtier de sécurité qui est en position de route, c'est-à-dire que le câble d'embrayage peut coulisser librement dans le boîtier de sécurité.

La figure 4 est une vue du boîtier de sécurité qui est en position d'antivol, c'est-à-dire que la simple action du câble d'embrayage bloque celui-ci.

La figure 5 est une vue du boîtier de sécurité qui est en position bloquée, c'est-à-dire que tout mouvement du câble d'embrayage est bloqué par la tige qui entre dans un trou du serre-câble.

Le boîtier de sécurité 2, au travers duquel passe le câble 3, comporte un moyen faisant office de serre-câble 30. Un moyen faisant office de tige de blocage 31 vient bloquer le passage du câble dans le boîtier de sécurité au niveau dudit serre-câble 30. La manoeuvre de la tige de blocage 31 est actionnée par des électro-aimants 32, 33 et un ressort de rappel 34.

La tige 31 est montée coulissante à travers une pièce support 37 solidaire dudit boîtier 2, deux disques 35, 36 sont montés sur la tige 31 et font office de butée de part et d'autre de la pièce support 37. Au niveau du serre-câble 30 est diposé un trou 38 dans la pièce de guidage 9, dans lequel peut venir s'engager la tige de blocage 31 lorsque celle-ci est libérée et est rappelée par son ressort de rappel 34, bloquant ainsi tout déplacement du câble d'embrayage 3.

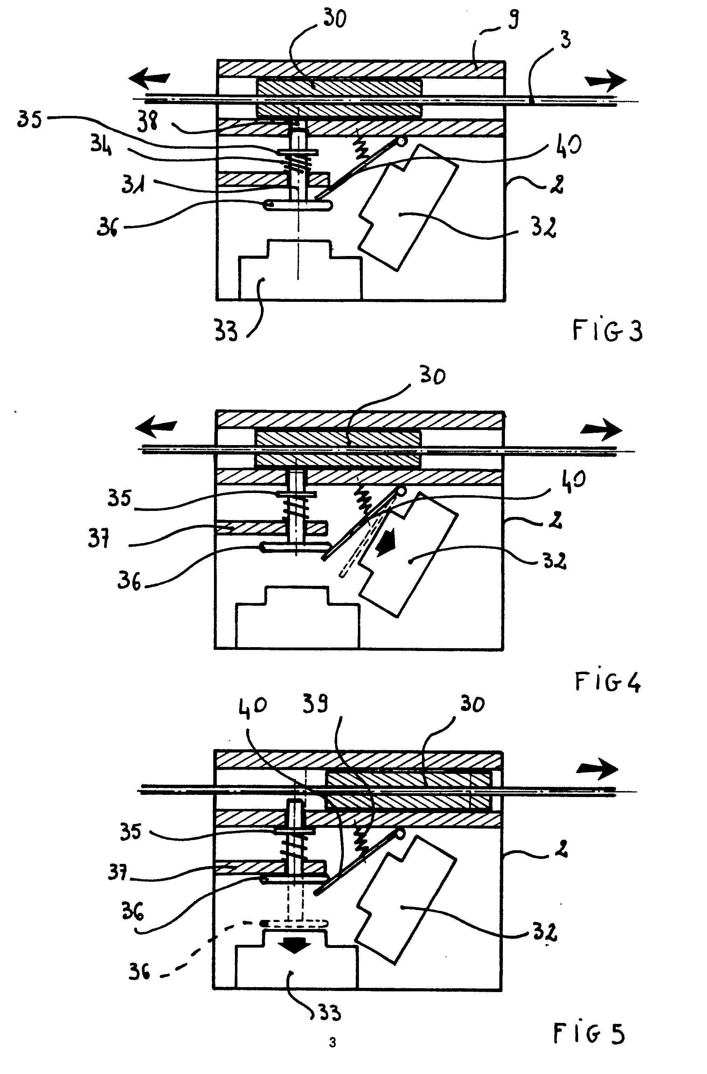

Dans la figure 3, le boîtier de sécurité est au repos, le câble d'embrayage 3 peut coulisser librement dans la pièce de guidage 9. A l'arrêt du véhicule 1, commandé par le boîtier électronique, l'électro-aimant 32 est excité, le levier 40 vient coller contre l'électro-aimant 32 et libère ainsi le disque 36. La tige de blocage 31 est donc libre, elle est rappelée par son ressort de rappel 34. Dans la figure 4, le boîtier de sécurité 2 est en position de veille. Si, sans code électronique pour déverrouiller le dispositif, une personne actionne le dispositif d'embrayage 3, le serre-câble 30 se déplace et permet à la tige de blocage 31 de venir dans la pièce de guidage 9 pour bloquer le câble d'embrayage 3 au niveau du serre-câble 30 qui vient buter contre ladite tige de blocage 31.

En actionnant le boîtier électrique, l'électro-aimant 33 attire vers lui la tige de blocage 31, comme représenté en pointillés sur la figure 5. Le levier d'arrêt 40 vient buter contre le disque 36 pour empêcher la tige de blocage 31 de passer dans la pièce de guidage 9 par son extrémité: ledit levier d'arrêt 40 est rappelé par un ressort de rappel 39. Pour réarmer le dispositif, il suffit d'actionner l'électro-aimant 32 qui attire vers lui le levier d'arrêt 40 et libère ainsi le disque 36; la tige de blocage 31 pourra entrer dans la pièce de guidage par son trou 38 dès que le passage sera libre.

**Revendications**

1. Dispositif pour protéger un véhicule automobile contre le vol utilisant le blocage d'un organe (3) essentiel à la marche du véhicule, ce dispositif comprenant:

- un boîtier de commande (5) fixé à l'intérieur de l'habitacle (6) du véhicule, et pouvant être actionné soit au moyen d'une clé de sécurité, soit au moyen d'un code électronique de chiffres et/ou de lettres programmé par le conducteur,
- d'un boîtier de sécurité (2) à travers lequel est monté coulissant ledit organe (3), ce boîtier de sécurité étant fixé dans le compartiment moteur (4) du véhicule,
- des moyens électromécaniques de blocage et de déblocage (33, 39, 40) montés dans le boîtier de sécurité (2) et mettant en jeu une tige (31) normalement rappelée dans sa position de blocage de l'organe (3) et débloquant l'organe (3) contre l'action de son ressort de rappel (34) lorsque les moyens électromécaniques reçoivent un signal électrique du boîtier de commande (5), dispositif caractérisé en ce que:

- l'organe essentiel de la marche du véhicule est son câble d'embrayage (3);
- le câble d'embrayage (3) muni d'un serre-câble (30) est guidé dans le boîtier (2) par une pièce de guidage (9), le serre-câble (30) venant buter dans sa course contre l'une ou l'autre des extrémités opposées du boîtier de sécurité (2),
- la pièce de guidage (9) comporte un trou (38) à travers lequel pénètre, à coulissement, la tige (31) contre laquelle bute l'une des extrémités du serre-câble (30) dans sa position de blocage,
- un support (37) est fixé à l'intérieur du boîtier de sécurité (2) et traversé par la tige (31) coulissante;
- des disques de butée (35, 36) sont fixés sur la tige de blocage (31) de part et d'autre du support (37) de manière à limiter le coulissement de la tige (31), le ressort de rappel (34) de la tige (31) étant disposé entre l'un des disques (35) et le support (37);
- des moyens de réarmement électromécaniques (39, 40) coopérant avec l'autre disque (36) de butée pour ramener la tige (31) de sa position de blocage à sa position de non-blocage dès réception d'un signal électrique provenant du boîtier de commande (5) et la maintenir ainsi en vue d'une nouvelle utilisation du véhicule.

2. Dispositif selon la revendication 1 caractérisé par le fait que l'action de la tige de blocage (31) est assurée par un électro-aimant (33) disposé dans l'axe de ladite tige (31), en regard de l'autre disque (36) et un ressort de rappel (34) disposé coaxialement à la tige (31) entre le support (37) et le premier disque (35).

3. Dispositif selon la revendication 1 caractérisé par le fait que les moyens de réarmement (32, 40, 39) sont composés d'un levier (40) pourvu d'un ressort de rappel (39) et d'un électro-aimant (32) disposé à proximité dudit levier (40), l'extrémité dudit levier (40) vient buter ou non contre l'autre disque (36).

**Patentansprüche**

1. Vorrichtung zur Sicherung eines Kraftfahrzeugs gegen Diebstahl unter Nutzung des Blockierens eines für die Fortbewegung des Fahrzeugs erforderlichen Organs (3), umfassend

- ein Steuergehäuse (5), welches im Innern des Fahrgastraums (6) des Fahrzeugs angeordnet ist und entweder mittels eines Sicherungsschlüssels oder eines elektronischen Ziffern- und/oder Buchstabencodes betätigbar ist, welcher vom Fahrer programmiert worden ist,

- ein Sicherungsgehäuse (2), durch welches das genannte Organ (3) verschiebbar angeordnet ist, wobei das Sicherungsgehäuse im Motorraum (4) des Fahrzeugs befestigt ist,

- elektromechanische Blockier- und Entblockierungseinrichtungen (33, 39, 40), welche in dem Sicherungsgehäuse (2) angeordnet sind und eine Stange (31) betätigen, welche sich normalerweise in ihrer eingefahrenen Position zur Blockierung des Organs (3) befindet, und welche das Organ (3) gegen die Wirkung seiner Rückholfeder bei Eingang eines elektrischen Signals von dem Steuergehäuse (5) entblockieren, wobei die Vorrichtung dadurch gekennzeichnet ist, daß

- das für die Fortbewegung des Fahrzeugs erforderliche Organ das Seil einer ausrückrückbaren Kupplung (3) ist,

- das mit einer Kabelklemme (30) versehene Seil der ausrückbaren Kupplung (3) in dem Gehäuse (2) durch ein Führungsstück (9) geführt ist, wobei die Kabelklemme während ihrer Bewegung sich gegen das eine oder das andere der entgegengesetzten Enden des Sicherungsgehäuses (2) abstützt,

- das Führungsstück (9) einen Durchlaß (38) aufweist, durch welchen während des Gleitens die Stange (31) hindurchgeht, gegen welche das eine der Enden der Kabelklemme (30) in ihrer Blockierstellung stößt,

- ein Träger (37) im Inneren des Sicherungsgehäuses (2) befestigt ist, durch welchen die gleitende Stange (31) hindurchgeht,

- Anschlagplatten (35, 36) an der Blockierstange (31) zu beiden Seiten des Trägers (37) angeordnet sind, um das Gleiten der Stange (31) zu begrenzen, wobei die Rückholfeder (34) der Stange (31) zwischen einer der Platten (35) und dem Träger (37) angeordnet ist,

- elektromagnetische Wiedereinschalteinrichtungen (39, 40), welche mit der anderen Anschlagplatte (36) zusammenwirken, um die Stange (31) bei Eingang eines elektrischen Signals von dem Steuergehäuse (5) von ihrer Blockierstellung in ihre nicht blockierte Stellung zurückzuführen und sie dort bis zur erneuten Verwendung des Fahrzeugs zu halten.

2. Vorrichtung nach Anspruch 1, dadurch gekennzeichnet, daß die Betätigung der Blockierstange (31) durch einen Elektromagneten (33) in der Achse der Stange (31) gegenüber der anderen Platte (36) und durch eine Rückholfeder (34) sichergestellt wird, welche koaxial zu der Stange (31) zwischen dem Träger (37) und der ersten Platte (35) angeordnet ist.

3. Vorrichtung nach Anspruch 1, dadurch gekennzeichnet, daß die Wiedereinschalteinrichtungen (32, 40, 39) aus einem Hebel (40) bestehen, welcher mit einer Rückholfeder (39) versehen ist, und aus einem in der Nähe des genannten Hebels (40) angeordneten Elektromagneten, wobei das Ende des Hebels (40) entweder an die andere Platte (36) anstößt oder auch nicht.

## Claims

1. A device for protecting a motor vehicle from thieves, utilizing the blocking of an element (3) essential for the motor vehicle to move, comprising

- a control housing (5) fixed in the interior of the passenger cabin (6) of the vehicle and apt to be actuated either by means of a safety key or by means of an electronic code of ciphers and/or letters, which is programmed by the driver;

- a safety housing (2) through which said element (3) is mounted for displacement, said safety housing being fixed in the engine compartment (4) of the vehicle;

- electromechanical blocking and deblocking means (33, 39, 40) mounted in the safety housing (2) and actuating a rod (31) normally retracted into its position for blocking the element (3) and deblocking the element (3) against the action of its recuperating spring (34) when the electromechanical means receive an electric signal from the control housing (5), the device being characterized in that

- the element essential for the vehicle to move is its cable of an engaging and disengaging clutch (3),

- the cable of the engaging and disengaging clutch (3), provided with a cable clamp (30), is guided in the housing (2) by means of a guiding piece (9), during its movement the cable clamp abutting the one or the other of the opposite ends of the safety housing (2);

- the guiding piece (9) comprises a hole (38) through which, during displacement, the rod (31) passes which one of the ends of the cable clamp (30) abuts in its blocking position;

- a support (37) is fixed in the interior of the safety housing (2) and traversed by the displacement rod (31);

- abutment discs (35, 36) are fixed on the blocking rod (31) on either side of the support (37) in order to limit the displacement of the rod (31), the recuperating spring (34) of the rod (31) being disposed between one of the discs (35) and the support (37);

- electromechanical reclosing means (39, 40) cooperating with the other abutment disc (36) in order to return the rod (31) from its blocking position to its non-blocking position upon receipt of an electrical signal from the control housing (5) and to hold it in this way in view of another utilization of the vehicle.

2. Device according to claim 1, characterized in that actuation of the blocking rod (31) is ensured by an electromagnet (33) disposed in the axis of the rod (31) opposite of the other disc (36) and a recuperating spring (34) disposed coaxially of the rod (31) between the support (37) and the first disc (35).

3. Device according to claim 1, characterized in that the electromechanical reclosing means (32, 40, 39) consist of a lever (40) provided with a recuperating spring (39), and of an electric magnet (32) disposed in the vicinity of said lever (40), the end of said lever (40) abutting the other disc (36), or not.

FIG 1

FIG 2

FIG 3

FIG 4

FIG 5